(19) Europäisches Patentamt / European Patent Office / Office européen des brevets

(11) **EP 2 504 480 B1**

(12) **EUROPEAN PATENT SPECIFICATION**

(45) Date of publication and mention
of the grant of the patent:
**16.12.2015 Bulletin 2015/51**

(21) Application number: **10782618.2**

(22) Date of filing: **26.11.2010**

(51) Int Cl.:
**D06F 37/20** (2006.01)     **D06F 49/06** (2006.01)
**F16F 15/10** (2006.01)

(86) International application number:
**PCT/EP2010/068341**

(87) International publication number:
**WO 2011/064348 (03.06.2011 Gazette 2011/22)**

(54) **LAUNDRY TREATING MACHINE PROVIDED WITH A VIBRATION DAMPER DEVICE**

WÄSCHEBEHANDLUNGSMASCHINE MIT EINER VIBRATIONSDÄMPFUNGSVORRICHTUNG

MACHINE DE TRAITEMENT DU LINGE POURVUE D'UN DISPOSITIF D'AMORTISSEMENT DES VIBRATIONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.11.2009 IT TO20090933**

(43) Date of publication of application:
**03.10.2012 Bulletin 2012/40**

(73) Proprietor: **Indesit Company, S.p.A.
60044 Fabriano (AN) (IT)**

(72) Inventors:
• **FRATERNALE, Giuseppe**
**I-60035 Jesi (AN) (IT)**
• **RESTA, Ferruccio**
**I-20123 Milano (IT)**
• **BELLOLI, Marco**
**I-24126 Bergamo (IT)**
• **SABATO, Diego**
**I-20154 Milano (IT)**

(74) Representative: **Dini, Roberto et al
Metroconsult S.r.l.
Via Sestriere 100
10060 None (TO) (IT)**

(56) References cited:
**EP-A1- 0 676 559     EP-A1- 1 887 125
EP-A1- 2 072 653     WO-A1-2007/147869
US-A- 5 924 312**

EP 2 504 480 B1

**Description**

The present invention relates to a laundry treating machine provided with a vibration damper device.

In the present description and in the appended claims reference will be made to laundry treating machines to indicate any washing, washing/drying or drying machines in which the laundry is placed in a rotary drum housed in a tub associated with a machine frame, and in which the laundry is subjected to at least one treatment, such as a washing cycle, a drying cycle or the like.

In these machines, the laundry is placed in the drum, which is rotated at variable speeds depending on the specific treatment to be carried out.

During the treatment steps, the eccentric arrangement of the laundry with respect to the axis of rotation of the drum causes much vibration, which must be avoided or reduced as much as possible: for this purpose, the drum and the tub are mounted as parts of one oscillating assembly suspended from the machine frame by means of springs.

The motion of the laundry acts as a force upon the oscillating assembly within a variable frequency range: in particular, it must be pointed out that, this being a harmonic force (caused by the eccentric arrangement of the laundry in the drum), the drum oscillates at the same frequency of the force, and therefore, since the forcing frequencies are directly proportional to the drum revolution speed, it follows that the force frequency (and thus the drum motion frequency) varies depending on the selected treatment: typically, in fact, the drum rotates at at least two different speeds, i.e. a lower speed and a higher speed, corresponding to two different treatments; for example, in a washing machine these speeds normally correspond to the speed kept by the drum during the washing steps and those kept during the spinning cycle.

It should also be taken into account that the oscillating assembly has particular modes of vibration of its own, determined by how it has been practically implemented and depending on a number of different factors, such as its tensor of inertia and the number, rigidity and orientation of the springs supporting it.

The oscillating assembly is therefore appropriately sized during the design stage in order to prevent its resonance frequencies from falling within the range of revolution speeds corresponding to the different treatment speeds, so as to avoid any risk of damage to the machine.

It must be noted that, in the transition between two treatment speeds, the oscillating assembly and the components connected thereto vibrate at the same forcing frequency with variable amplitude; of course, said amplitude increases as the forcing frequency approaches one of the resonances of the oscillating assembly.

At present, in order to limit the vibration amplitude, dampers mounted between the oscillating assembly and the frame are used which dissipate energy by limiting the amplitude of the oscillations over the whole operating range of the machine, including those speeds for which the resonance frequencies are excited.

However, at high revolution speeds (e.g. during a spin cycle in a washing machine), the presence of the dampers causes the transmission of high forces, both in modulus and frequency, to the frame, resulting in undesired vibrations of the frame itself: such vibrations may originate several problems, such as, for example, a noisy machine or the frame thereof moving from its position on the floor.

Aiming at reducing the vibrations transmitted from the drum to the frame, some solutions have been conceived, such as, for example, the one described in document EP 1887125 to ELECTROLUX HOME PRODUCTS CORP. N.V.; this solution uses a tuned mass damper consisting of an additional mass elastically suspended from the machine frame by means of a spring: the characteristics of the spring and of the additional mass are selected in a manner such that the latter vibrates in agreement with the resonance frequency in order to reduce the amplitude of the frame vibrations.

A first drawback of this solution is that the whole system is calibrated on the basis of the rigidity of the spring along its axis of deformation, that is the only axis in which the action of the additional mass turns out to be effective in reducing vibrations.

The spring, in fact, acts mainly in one direction, i.e. the one coinciding with the axis parallel to its extension direction, so that vibrations can only be effectively reduced in that direction.

However, due to load unbalance, the drum vibrates in the whole three-dimensional space; hence the above-described solution does not seem to be able to solve the problem of load unbalance causing vibration in space (i.e. in the three dimensions).

One alternative solution, which partly remedies to said problem, has been disclosed in document US 5,924,312 to MAYTAG CORPORATION; its principle of operation is essentially the same as that described above, the only difference being that multiple springs are provided, all of which are arranged in the same plane, which may be either horizontal or vertical depending on the position (vertical or horizontal, respectively) of the drum axis.

In this case as well, a suspended mass is connected to the springs, and these are connected to the machine frame; the suspended mass and the springs are chosen in a manner such that they vibrate in agreement with the resonance frequency.

This solution offers the unquestionable advantage, over the other solution previously described, of being able to damp vibrations in two directions, but the measures to be taken in order to damp vibrations in space based on this principle would be very bulky and expensive because a large number of springs should be used (theoretically, one spring for each direction in which vibrations are to be damped).

Moreover, these two solutions, although effective, also suffer from the additional drawback that they must be accurately calibrated.

In fact, they share the same basic principle according to which the intervention of the additional mass occurs precisely at the machine resonance frequency; a wrong setting will therefore cause it to intervene at different frequencies, resulting in ineffective operation: to this end, in fact, the system of the first aforementioned document is provided with an adjuster device adapted to calibrate the frequency of intervention of the additional mass.

Furthermore, in these known systems the machine that carries out the washing essentially comprises two different oscillating assemblies (one comprising the drum and the other comprising the additional mass), both of which are suspended from the frame and vibrate at a certain frequency: this implies that suitable couplings are to be provided for both oscillating assemblies in order to connect them to the frame, which couplings must be sized appropriately to withstand the vibrations transmitted to the frame by both oscillating assemblies.

A different solution is described in document EP 0676559 to COOPER TIRE & RUBBER CO., which discloses a washing machine provided with a tuned mass damper applied to the machine drum and consisting of a variable mass obtained by means of a fillable tank, the weight of which can be varied.

In this solution, the tuned mass damper is a tank that can be suspended from the drum of a washing machine through a spring and then filled.

Like the first solution previously discussed, this solution also suffers from the problem that it is only effective in one main direction.

In addition, this solution also requires, as already discussed, to be properly calibrated to ensure that it operates at the resonance frequency of the oscillating assembly, since the basic principle is the same.

It follows that the dampers according to the solutions known in the art are not effective in all directions.

Apart from the unbalance caused by the eccentricity of the laundry load, in fact, additional modes of vibration may be excited when the load is positioned in such a way that the centre of gravity thereof does not fall in the barycentric plane of the oscillating assembly: it follows that, for the tuned mass damper to operate properly in all directions and according to all excited modes of vibration, it is necessary to provide more than one damper, or to anchor the additional mass with multiple springs, each extending in a different direction.

This latter solutions makes the implementation process even more complex, in that the system must be recalibrated to take into account the interactions among the different springs.

The present invention aims at providing a laundry treating machine equipped with a vibration damper device capable of overcoming the aforementioned drawbacks.

These results are achieved through a laundry treating machine comprising the features set out in the appended claims, which are intended as an integral part of the present description.

The present invention is based upon the idea of associating the oscillating assembly with a tuned mass damper comprising at least one mass and one elastic member having the same rigidity in more than one direction.

Thus, vibrations can be damped properly in more than one direction, i.e. in all directions in which the elastic member has equal rigidity.

Furthermore, as will be described in detail hereafter, the manufacturing process is simplified and the tuned mass damper can be accommodated in a normal laundry treating machine without needing any additional volumes specifically for that purpose. According to a further improvement, the elastic member also comprises at least two deformable components placed in contact with each other and mutually interacting to provide a damping which acts within a frequency range around the resonance frequency. In this manner, as will be explained more in detail hereafter, it is possible to obtain a tuned mass damper which, instead of intervening only at the resonance frequency of the oscillating system, provides its damping effect over a range of frequencies and is therefore less sensitive to possible variations in the frequencies of the oscillating assembly due to the presence of unbalanced loads of different sizes.

Further features and advantages of the present invention will become more apparent from the following description of an embodiment thereof shown in the annexed drawings, which are supplied by way of non-limiting example, wherein:

Fig. 1 shows a simplified cross-sectional view of a laundry treating machine according to the prior art;
Fig. 2 shows a simplified cross-sectional view of a laundry treating machine according to the present invention;
Fig. 3 shows an example of a vibration damper device which exploits the existing mounting points of a washing machine to constrain the damper to the oscillating assembly;
Fig. 4 shows a detail of the device of Fig. 2;
Fig. 5 shows the frequency response of a machine lacking the tuned mass damper according to the present invention;
Fig. 6 shows a plurality of curves, each corresponding to a different damping of the tuned mass damper according to the present invention;

Fig. 7 shows the transfer function in a condition of optimal damping of a machine provided with a tuned mass damper according to the present invention;
Fig. 8 shows a first variant of the damper of Fig. 3;
Fig. 9 shows a second variant of the damper of Fig. 3;
Fig. 10 shows a further variant of the damper of Fig. 3.

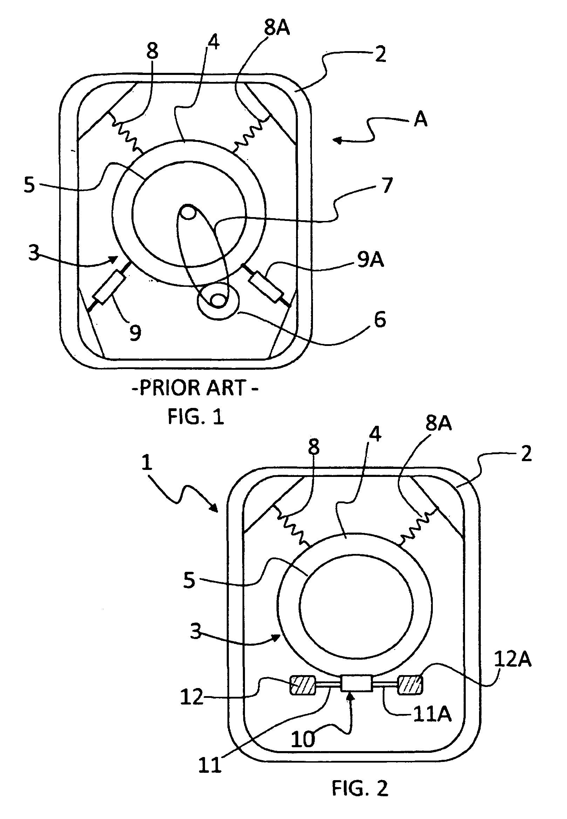

Referring now to Fig. 1, there is shown a laundry treating machine A according to the prior art: the machine A comprises a frame 2 to which an oscillating assembly 3 is secured, which in turn comprises the tub 4 that internally houses the rotary drum 5 driven by the motor 6 through the belt 7 or, in other solutions, by a motor directly coupled to the shaft of the drum 5.

The frame 2 is typically made out of metal sections bent and welded to form a support structure for the outer panels of the machine A.

In certain solutions, at least some of these panels are themselves a part of the frame, since they are welded or irremovably coupled to the sections thereof.

As can be seen, the oscillating assembly 3 installed in the machine A is associated with the frame 2 by means of the springs 8, 8A and the dampers 9, 9A for the purposes previously discussed.

Fig. 2 shows a machine 1 designed in accordance with the present invention: the same reference numerals designate the same parts of the machine of Fig. 1, which parts will not be described any further for simplicity; for better clarity, the machine 1 is shown without motor and drive belt.

The latter are usually employed, but both the way in which the motor 6 is coupled to the oscillating assembly 3 and the system used for transmitting the motion to the drum (belt, direct coupling or the like) may vary depending on specific construction requirements and do not affect the comprehension of the invention.

As can be seen, the machine 1 has no dampers, while it includes the springs 8 and 8A that elastically suspend the oscillating assembly from the frame 2.

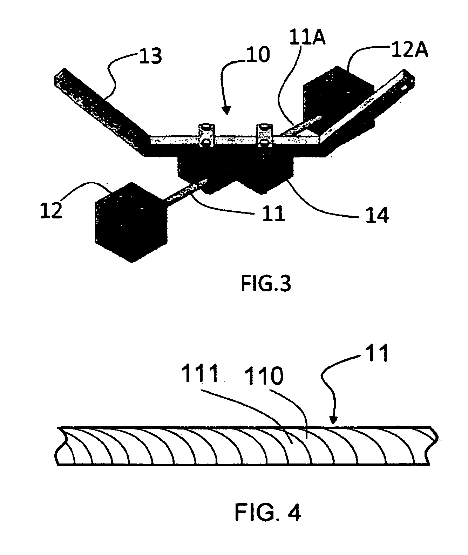

Associated with the oscillating assembly 3, there is a tuned mass damper 10 according to the present invention shown in detail in Fig. 3, which comprises two elastic members 11 and 11A, each associated with a corresponding mass 12 and 12A and connected to the oscillating assembly 3 only.

It is important to point out right away that the tuned mass damper 10 is only coupled to the oscillating assembly 3: this allows it to perform its vibration damping function in the frequency range for which it has been tuned, without directly discharging any force onto the frame.

In fact, the supports for the masses 12 and 12A are a part of the tuned mass damper, in accordance with the teachings of the present invention.

In the example shown, it comprises two masses 12 and 12A, each suspended from the oscillating assembly only through the respective elastic members 11 and 11A; it should however be noted that there may also be just a single mass suspended from the oscillating assembly only by means of just one elastic member, or even three or more masses, each suspended from the oscillating assembly through its own elastic member.

In accordance with the teachings of the present invention, each elastic member 11, 11A has the same rigidity in more than one direction of motion of the mass 12, 12A associated therewith.

This can be achieved, for example, by manufacturing each elastic member 11, 11A as a beam with one blocked end (the one corresponding to the point of coupling to the oscillating assembly) and the other end connected to the mass.

In the example shown in Fig. 3, in fact, it can be seen that the two elastic members 11, 11A consist of two beams simply blocked into a common element anchored to the oscillating assembly.

This solution ensures that the tuned damper 10 behaves regularly in more than one direction and is highly efficient, while still having relatively small dimensions which allow it to be easily accommodated by exploiting the spaces existing in a normal laundry treating machine.

More in particular, in the example provided each elastic member 11, 11A is manufactured by means of a beam consisting of a multi-filament cable (with multiple strands variously twisted together).

The strands making up the cable represent a plurality of deformable components placed in contact with one another, so as to provide a high degree of damping.

The tuned mass damper thus offers an additional advantage: in fact, the degree of damping it provides is normally higher than that of the springs adopted in the prior art, since the deformable components included in the elastic member are in contact with one another and, when subjected to vibration transmitted by the drum, generate a friction force.

In this respect, still with reference to the embodiment shown in Fig. 3, the tuned mass damper 10 comprises a profiled bracket 13 for coupling it to the oscillating assembly 3; the profiled bracket 13 is secured to the tub 4, e.g. by means of screws, as shown in Fig. 2.

More in detail, in the example of Fig. 3 the supports 11 and 11A are two multi-filament metal cables lying in this case in the same horizontal plane, in particular on the same straight line oblique relative to the axis of rotation of the drum.

More specifically, the centre of gravity of both masses 12 and 12A falls in this case on the same vertical straight line that comprises the centre of gravity of the oscillating assembly, in that this provides additional advantages in terms of machine balancing, which becomes easier.

In general, however, it must be pointed out that the orientation of the metal cables 11 and 11 A is not fundamental for the proper operation of the tuned mass device 10.

It may be generally stated that, for the device to operate properly, the orientation of the metal cables must be such that for the mode(s) of vibration taken into consideration, the Lagrange component of the forces exchanged between the tuned mass damper and the oscillating assembly is not null.

A multi-filament metal cable is generally shown in Fig. 4, and may consist, for example, of a steel cable of the type with multiple strands 110 and 111 twisted together.

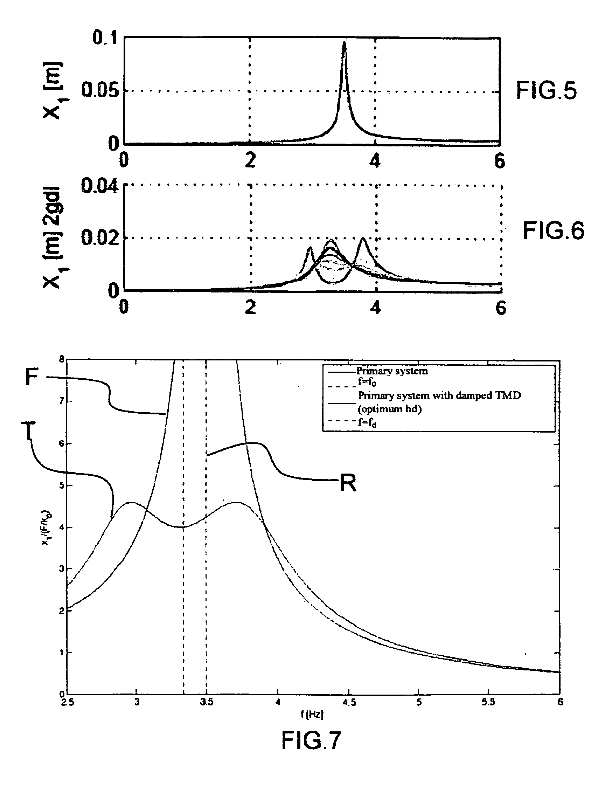

When in operation, the force-transmitted vibrations excite the masses 12 and 12A; the presence of the elastic members 11 and 11A causes the tuned mass damper 10 to provide an adequate degree of damping due to the fact that, during the motion of the masses 12 and 12A and of the tub 4, the strands 110 and 111 slide relative to each other and generate friction which absorbs a part of the energy transmitted by the force, thereby optimally contributing to the damping not only at the resonance frequency, but over a frequency range extending around it, as shown in Figs. 5 and 6.

In the graphs of Figs. 5 and 6, the axis of abscissas indicates the frequency, while the axis of ordinates indicates the acceleration.

Fig. 5 shows the frequency response of a machine A lacking the tuned mass damper 10 according to the present invention, whereas Fig. 6 shows a plurality of curves, each corresponding to a different dimensionless damping provided by the tuned mass damper only.

The damper 10 according to the present invention can operate within a wider frequency range around the resonance frequency and is less sensitive to changes occurring in the machine 1.

As concerns the selection of the rigidity (k) of the multi-filament cable, or more in general of an elastic member used for suspending each mass of the tuned mass damper 10, it must be chosen in a manner such that:

$$k = m(2\pi f_0)^2$$

where m is the weight of the tuned mass and f0 is the frequency to be covered, or frequency of intervention, which is in a neighborhood of the said at least one of the resonance frequencies of the oscillating assembly.

The damping of the cable (r) must be close to the optimum value:

$$r = 2m(2\pi f_0)\sqrt{3\mu / 8(1 + \mu)}$$

where $\mu$ = ratio between the mass of the oscillating assembly and the mass 12, 12A of the tuned mass damper 10.

The mass of the oscillating assembly may be measured directly on the washing machine, whereas the mass 12, 12A of the damper 10 is normally chosen a priori depending on dimensional limits.

Tests carried out have shown that it is particularly advantageous, in terms of efficiency and compactness, to use a total mass of the damper 10 equal to approximately 10% of the mass of the oscillating assembly.

These two values being known, it is possible to obtain the ratio $\mu$ therebetween and calculate the optimal damping of the cable by means of the simple relation mentioned above.

In this manner, in fact, the transfer function that relates the force to the oscillations of the oscillating assembly has a trend characterised by the presence of two resonances with damped peaks, whose oscillation amplitude depends on the damping r.

The trend of said transfer function in a condition of optimal damping, calculated as described above, is shown in Fig. 7, where it is compared with the trend of the function F pertaining to the transfer function that the oscillating assembly would have in the absence of the tuned mass damper 10 thus designed, in the proximity of a resonance frequency R thereof, indicated by the dashed vertical asymptote.

As a further improvement, it should be pointed out that each mass 12 and 12A is movable along the respective support 11 and 11A, so as to vary its distance from the centre of gravity of the oscillating assembly 3 and allow the damper 10 to be adjusted.

The latter can thus dynamically absorb the vibrations, since it is synchronised with the frequencies of the oscillating assembly, so as to optimise its own operation in resonance conditions, which are typically found within the revolution speed range of a transition from one treatment speed to another.

The tuned mass damper 10 can therefore attenuate the amplitude of the oscillations in operating conditions of the oscillating assembly close to or coinciding with those of resonance forcing: the degree of vibration amplitude reduction is a function of the accuracy of selection of both the mass ratio between the oscillating assembly and the tuned mass damper 10 and the dimensionless damping of the latter.

By appropriately sizing the masses 12 and 12A and their distance from the centre of gravity of the oscillating assembly 3 (by moving them along the supports 11, 11A) and by choosing a suitable rigidity of the elastic member that constrains them to the oscillating assembly, it is thus possible to reduce the oscillation amplitude of the latter in a manner such as to obtain (during transient operation and near the resonance frequencies) results comparable with those provided by the traditional dampers 9 and 9A, plus the advantage that when the machine is operating at high speed no forces are discharged onto the frame, which would otherwise cause machine noise or frame movement.

In this operating condition, in fact, the stresses generated by the arrangement of the laundry in the drum, together with the high revolution speed of the latter, subject the oscillating assembly to high-frequency stresses, which are however almost completely countered by the force of inertia and partly absorbed by the springs 8 and 8A, which are the only points of constraint between the oscillating assembly 3 and the frame 2.

The damper 10 has elastic members extending in a horizontal plane, which is oblique relative to the axis of rotation of the drum, but they may as well lie in a vertical or oblique plane, due to the fact that the masses suspended from the supports have more than one degree of freedom.

Such an orientation is chosen based on the modal form of the mode(s) which needs most to be damped.

This also contributes to make such a solution easily installable in different types of laundry treating machines, since it can address any issues concerning the dimensions of the various parts of each of such machines.

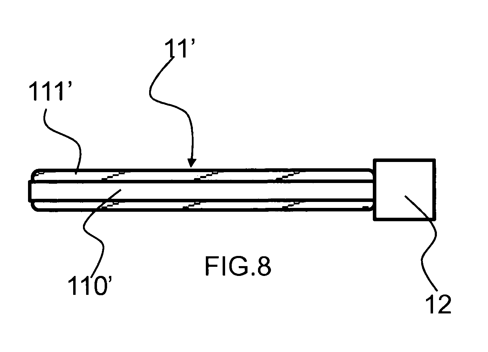

Some alternative embodiments of the elastic members are shown in Figs. 8, 9, 10 and 11.

Fig. 8 shows an elastic member 11' which comprises two deformable components 110' and 111" consisting, in this example, of a rod 110' and an elastomer 111' that coats the rod like a sheath.

The principle of operation is the same as the one described above, except that the damping action of the rod is further increased through the relative sliding between the rod 110' and the elastomer 111'.

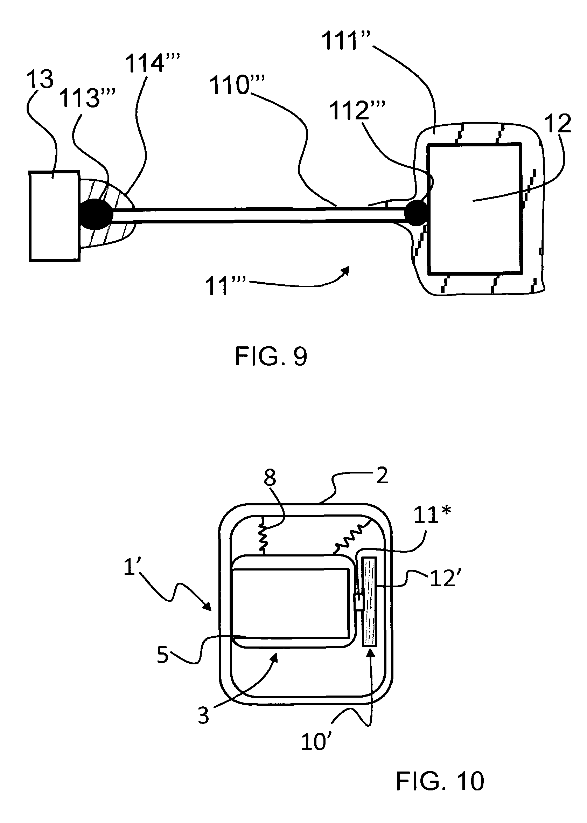

Another alternative is shown in Fig. 9, wherein the mass 12 is connected at its two opposite ends, through spherical hinges, to the mass 12 by means of the hinge 112"' and to a support 13 secured to the oscillating assembly by means of the hinge 113"'.

In this case the elastic member 11"' also comprises two elastomer sheaths 111"' and 114"' which cover the hinges 113"' and 112"', so as to provide the connection with rigidity and damping capability.

This solution therefore includes several deformable components: the rod 110"' and the elastomer sheaths 114"' and 111"', in contact with each other, which, when the machine is operating, provide the above-described damping by mutual friction.

Yet another alternative is shown in Fig. 10, wherein, instead of the two masses 12, there is only one discoidal mass 12' arranged behind the tub and connected thereto through a single elastic member 11*: the latter is similar to the supports for the elastic members 11, 11' and 11".

It is so designed as to have the same rigidity in at least more than one direction, and further comprises at least two deformable elastic components.

The operation of this solution and the advantages thereof are similar to the examples previously discussed and will not be described any further.

It is apparent, however, that many changes may be made to the present invention by those skilled in the art without departing from the protection scope thereof as stated in the appended claims.

For example, the masses may have any shape; they may be substantially cubic or spherical bodies. In one embodiment, said bodies may have an elongated shape and extend in a direction transversal to the rod that connects the mass to the oscillating assembly.

In general, the shape of the masses 12 and 12A may also be optimised in terms of moments of inertia in order to cover other specific frequencies.

Useful indications regarding the choice of the shape of the masses (so that they can be optimised in terms of moments of inertia to cover other specific frequencies) can be found in the text-book "Fondamenti di meccanica teorica ed applicata" by: N.Bachschmid, S.Bruni, A.Collina, B.Pizzigoni, F.Resta. Edizioni Mc Graw Hill (2003). The masses may then consist, without distinction, of solid bodies or containers filled with a material, e.g. water, so that when said material fills the whole volume of the container, the latter has the desired mass.

This latter solution is particularly advantageous in that it allows to reduce the weight of the laundry treating machine in view of its transportation; the machine is fitted with empty tanks, and the installer will then fill them on site with a suitable material so as to obtain the mass required for damping the desired vibrations.

The tank being full and sealed with a cap to prevent any leakage, it substantially behaves like a solid body.

**Claims**

1. A laundry treating machine (1,1'), of the type comprising at least one frame (2) for supporting a rotary drum (5) suitable to contain the laundry to be subjected to treatment, said drum (5) being housed inside a tub (4), wherein at least the tub (4) and the drum (5) are part of an oscillating assembly (3) that oscillates relative to the frame (2), wherein the oscillating assembly (3) is associated with a tuned mass damper (10) that is connected solely to the oscillating assembly (3), and comprises at least one mass (12,12A,12') and one elastic member (11,11A,11',11",11"',11*), said at least one mass (12,12A,12') and said one elastic member (11,11A,11',11",11"',11*) having the same rigidity in at least more than one direction, **characterised in that** said elastic member (11,11A,11',11",11"',11*) comprises at least two deformable components (110,111,110',111',110",111",110"',111"',114"'), and said at least two deformable components (110,111,110',111',110",111",110"',111"',114"') are placed in contact with each other and are adapted to move relative to each other during at least one operating step of the machine (1,1').

2. A machine according to claim 1, wherein at least one of the resonance frequencies of the oscillating assembly falls within a drum revolution speed range comprised between a first and a second revolution speeds, each corresponding to an operating speed of the machine in a laundry treatment condition, and wherein the tuned mass damper (10) is calibrated in a manner such as to attenuate the amplitude of the oscillations of the oscillating assembly within said range.

3. A machine according to any one of the preceding claims, wherein said elastic member (11,11 A) is a multi-filament metal cable of the type comprising a plurality of strands (110,111).

4. A machine according to any one of the preceding claims, wherein said tuned mass damper comprises a first and a second mass (12,12A), each coupled to said oscillating assembly at least by means of a respective metal cable (11,11A).

5. A machine according to claim 4, wherein each metal cable lies in a plane which is oblique relative to an axis of rotation of said drum.

6. A machine according to any one of claims 3 to 5, wherein said at least one mass (12,12A,12') is movable along said metal cable.

7. A machine according to any one of the preceding claims, wherein said at least one mass is a tank which can be filled with a liquid.

8. A machine according to any one of claims 2 to 7, wherein the rigidity (k) of said elastic member is selected in a manner such that:

$$k = m(2\pi f_0)^2$$

where m is the weight of said tuned mass and f0 is the frequency of intervention, which is in a neighborhood of the said at least one of the resonance frequencies of the oscillating assembly.

**Patentansprüche**

1. Wäschebehandlungsmaschine (1, 1') vom Typ umfassend mindestens einen Rahmen (2) zum Halten einer rotierenden Trommel (5), die geeignet ist, die einer Behandlung auszusetzende Wäsche aufzunehmen, wobei die Trommel (5) innerhalb einer Wanne (4) untergebracht ist, wobei zumindest die Wanne (4) und die Trommel (5) Teil einer oszillierenden Baugruppe (3) sind, die relativ zum Rahmen oszilliert, wobei
die oszillierende Baugruppe (3) mit einem eingestellten Massendämpfer (10) verbunden ist, der ausschließlich an der oszillierenden Baugruppe (3) befestigt ist, und mindestens eine Masse (12, 12A, 12') und ein elastisches Bauteil (11, 11A, 11', 11", 11"', 11*) umfasst, wobei die mindestens eine Masse (12, 12A, 12') und das mindestens eine elastische Bauteil (11, 11A, 11', 11", 11"', 11*) die gleiche Steifigkeit in mindestens mehr als einer Richtung aufweisen, **dadurch gekennzeichnet, dass**

das elastische Bauteil (11, 11A, 11', 11", 11", 11*) zumindest zwei deformierbare Komponenten (110, 111, 110', 111', 110", 111", 110'", 111'", 114'") umfasst, und die mindestens zwei deformierbaren Komponenten (110, 111, 110', 111', 110", 111", 110'", 111'", 114'") in Kontakt miteinander angeordnet und eingerichtet sind, um sich relativ zueinander während eines Betriebsschritts der Maschine (1, 1') zu bewegen.

2. Maschine nach Anspruch 1, wobei zumindest eine der Resonanzfrequenzen der oszillierenden Baugruppe innerhalb eines Drehzahlbereichs der Trommel fällt, der zwischen einer ersten und einer zweiten Drehzahl liegt, die einer Betriebsgeschwindigkeit der Maschine in einer Wäschebehandlungsbedingung entsprechen, wobei der eingestellte Massendämpfer (10) in einer Weise kalibriert ist, so dass die Amplitude der Oszillationen der oszillierenden Baugruppe innerhalb des Bereichs gedämpft werden.

3. Maschine nach einem der vorhergehenden Ansprüche, wobei das elastische Bauteil (11, 11A) ein Multifilament-Metallkabel des Typs ist, der mehrere Drähte (110, 111) umfasst.

4. Maschine nach einem der vorhergehenden Ansprüche, wobei der eingestellte Massendämpfer eine erste und eine zweite Masse (12, 12A) umfasst, die beide mit der oszillierenden Baugruppe zumindest mittels eines entsprechenden Metallkabels (11, 11A) gekoppelt sind.

5. Maschine nach Anspruch 4, wobei jedes Metallkabel in einer Ebene liegt, die schräg relativ zur Achse der Rotation der Trommel ist.

6. Maschine nach einem der Ansprüche 3 bis 5, wobei die mindestens eine Masse (12, 12A, 12') entlang des Metallkabels bewegbar ist.

7. Maschine nach einem der vorhergehenden Ansprüche, wobei die mindestens eine Masse ein Behälter ist, der mit einer Flüssigkeit gefüllt werden kann.

8. Maschine nach einem der Ansprüche 2 bis 7, wobei die Steifigkeit (k) des elastischen Bauteils derart gewählt ist, dass:

$$k = m(2\pi f_0)^2$$

wobei m das Gewicht der eingestellten Masse und $f_0$ die Frequenz der Intervention ist, die benachbart zu der mindestens einen der Resonanzfrequenzen der oszillierenden Baugruppe ist.

## Revendications

1. Machine de traitement du linge (1, 1'), du type comportant au moins une structure (2) permettant de supporter un tambour rotatif (5) approprié pour contenir le linge qui doit subir un traitement, ledit tambour (5) étant logé à l'intérieur d'une cuve (4), dans laquelle au moins la cuve (4) et le tambour (5) font partie d'un ensemble oscillant (3) qui oscille par rapport à la structure (2), dans laquelle l'ensemble oscillant (3) est associé à un dispositif d'amortissement à masse accordée (10) qui est raccordé seulement à l'ensemble oscillant (3) et qui comporte au moins une masse (12, 12A, 12') et un élément élastique (11, 11A, 11', 11", 11'", 11*), ladite au moins une masse (12, 12A, 12') et ledit élément élastique (11, 11A, 11', 11", 11'", 11*) présentant la même rigidité dans au moins plus d'une direction, **caractérisée en ce que** ledit élément élastique (11, 11A, 11', 11", 11'", 11*) comporte au moins deux composants déformables (110, 111, 110', 111', 110", 111", 110'", 111'", 114'") et **en ce que** lesdits, au moins deux, composants déformables (110, 111, 110', 111', 110", 111", 110'", 111'", 114'") sont placés en contact l'un avec l'autre et sont conçus pour se déplacer l'un par rapport à l'autre pendant au moins une étape de fonctionnement de la machine (1, 1').

2. Machine selon la revendication 1, dans laquelle au moins l'une des fréquences de résonance de l'ensemble oscillant tombe à l'intérieur d'une plage de vitesse de rotation du tambour comprise entre une première et une seconde vitesses de rotation, correspondant, chacune, à une vitesse de fonctionnement de la machine dans une situation de traitement du linge, et dans laquelle le dispositif d'amortissement à masse accordée (10) est calibré de façon à atténuer l'amplitude des oscillations de l'ensemble oscillant à l'intérieur de ladite plage.

3. Machine selon l'une quelconque des revendications précédentes, dans laquelle ledit élément élastique (11, 11A) est un câble de métal à plusieurs fils du type comportant une pluralité de brins (110, 111).

4.  Machine selon l'une quelconque des revendications précédentes, dans laquelle ledit dispositif d'amortissement à masse accordée comporte une première et une seconde masses (12, 12A), chacune étant couplée au dit ensemble oscillant au moins par l'intermédiaire d'un câble métallique respectif (11, 11A).

5.  Machine selon la revendication 4, dans laquelle chaque câble métallique repose dans un plan qui est oblique par rapport à un axe de rotation dudit tambour.

6.  Machine selon l'une quelconque des revendications 3 à 5, dans laquelle ladite au moins une masse (12, 12A, 12') peut se déplacer le long dudit câble métallique.

7.  Machine selon l'une quelconque des revendications précédentes, dans laquelle ladite au moins une masse est un réservoir qui peut être rempli par un liquide.

8.  Machine selon l'une quelconque des revendications 2 à 7, dans laquelle la rigidité (k) dudit élément élastique est sélectionnée d'une manière telle que :

$$k \;=\; m(2\pi f_0)^2$$

où m représente le poids de ladite masse accordée et f0 est la fréquence d'intervention, laquelle se situe au voisinage de ladite au moins une des fréquences de résonance de l'ensemble oscillant.

-PRIOR ART -
FIG. 1

FIG. 2

FIG.3

FIG. 4

FIG.5

FIG.6

FIG.7

FIG.8

FIG. 9

FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1887125 A
- US 5924312 A
- EP 0676559 A

**Non-patent literature cited in the description**

- **N.BACHSCHMID ; S.BRUNI ; A.COLLINA ; B.PIZZIGONI ; F.RESTA.** Fondamenti di meccanica teorica ed applicata. Mc Graw Hill, 2003